Europäisches Patentamt

European Patent Office

Office européen des brevets

(19)

(11) Veröffentlichungsnummer: **0 248 821 B1**

(12) **EUROPÄISCHE PATENTSCHRIFT**

(45) Veröffentlichungstag der Patentschrift:
03.05.89

(21) Anmeldenummer: 86906285.1

(22) Anmeldetag: 05.11.86

(86) Internationale Anmeldenummer:
**PCT/DE 86/00446**

(87) Internationale Veröffentlichungsnummer:
**WO 87/03547 (18.06.87 Gazette 87/13)**

(51) Int. Cl.⁴: **B 60 C 23/04,** H 01 H 35/26

(54) REIFENDRUCKSENSOR FÜR KRAFTFAHRZEUGE.

(30) Priorität: 12.12.85 DE 3543866

(43) Veröffentlichungstag der Anmeldung:
16.12.87 Patentblatt 87/51

(45) Bekanntmachung des Hinweises auf die Patenterteilung:
03.05.89 Patentblatt 89/18

(84) Benannte Vertragsstaaten:
DE FR GB IT SE

(56) Entgegenhaltungen:
DE-A- 3 004 493
DE-C- 3 507 253
FR-A- 2 241 420
US-A- 3 185 785

(73) Patentinhaber: ROBERT BOSCH GMBH, Postfach 50,
D-7000 Stuttgart 1 (DE)

(72) Erfinder: HAAS, Lothar, Kastanienweg 10, D-8504 Stein
(DE)
Erfinder: HETTICH, Gerhard, Martin-Renz-Strasse 8,
D-8501 Dietenhofen (DE)
Erfinder: SCHMID, Hans-Dieter, Kamenzerstrasse 8,
D-8500 Nürnberg 60 (DE)

# Beschreibung

## Stand der Technik

Die Erfindung geht aus von einem Reifendrucksensor für Kraftfahrzeuge nach der Gattung des Hauptanspruchs. Aus der DE-A-28 32 447 ist es bekannt, einen Reifendrucksensor mit einem vom Reifendruck zu betätigenden Druckschalter zur Überwachung des Luftdrucks im Reifen am Umfang einer Radfelge einzuschrauben. Der Druckschalter besteht dort zum einen aus einer elektrisch leitenden Membran, die eine Referenzdruckkammer zum Reifen hin abschliesst und zum anderen aus einem Kontaktstift, der in der Referenzdruckkammer elektrisch isoliert in einer Glasdurchführung eingeschmolzen ist und auf den sich zur Schliessung eines Stromkreises der mittlere Bereich der Membran bei ausreichendem Luftdruck im Reifen anlegt. Die Referenzdruckkammer wird über einen Kanal mit Luft oder Stickstoff auf einen gewünschten Referenzdruck gefüllt, und danach druckdicht verschlossen. Der Referenzdruck ist so gewählt, dass bei ausreichendem Luftdruck im Reifen die Membran am Ende des Kontaktstiftes anliegt. Fällt dagegen der Luftdruck im Reifen unter einen durch den Referenzdruck vorgegebenen Mindestdruck, so hebt die Membran vom Kontaktstift ab und öffnet einen im Reifendrucksensor angeordneten Schwingkreis aus einer Spule und einem Kondensator. Über eine hochfrequente Schwingung der im Fahrzeug fest angeordneten Auswerteschaltung lässt sich mit einem in Radnähe angeordneten Signalaufnehmer beim Vorbeilaufen des Reifendrucksensors mit jeder Radumdrehung feststellen, ob der Druckschalter geschlossen ist.

Bei den bekannten Ausführungen eines derartigen Reifendrucksensors ist es von Nachteil, dass bei einem Leck in der Referenzdruckkammer z. B. an der Einspannstelle der Membran ein Druckausgleich in der Referenzdruckkammer stattfindet, wobei der Stromkreis durch die Membran geschlossen bleibt, so dass auch bei zu geringem Luftdruck vom Reifendrucksensor die Information „Reifendruck in Ordnung" abgegeben wird. Eine entsprechende Fehlanzeige tritt auch auf, wenn am Einfüllkanal oder an der Durchführung des Kontaktstiftes ein Leck in der Referenzdruckkammer auftritt.

Mit der vorliegenden Lösung wird angestrebt, mit einfachen Mitteln beim Auftreten eines Lecks an der Referenzdruckkammer ein Signal an die Auswerteschaltung abzugeben.

## Vorteile der Erfindung

Der erfindungsgemässe Reifendrucksensor mit dem kennzeichnenden Merkmal des Anspruchs 1 hat den Vorteil, dass bereits bei einem Druckausgleich zwischen Referenzdruckkammer und Reifendruck die Membrane von dem Kontaktstift abhebt und dadurch ein Alarmsignal an die Auswerteschaltung abgibt, d. h. im differenzdrucklosen Zustand ist der Kontakt geöffnet. Kommt der Druckausgleich durch ein Leck zustande, so wird beim Nachfüllen des Reifens nach kurzer Zeit (wegen Druckausgleich) erneut zu niedriger Druck signalisiert. Bei zu niederem Reifendruck und Nachfüllen geschieht dies nicht.

Als weiterer Vorteil ist anzusehen, dass eine derartige Leckanzeige bereits während der Herstellung des Reifendrucksensors bzw. vor seiner Auslieferung oder beim Einbau in einer Werkstatt zur Dichtheitsprüfung der Referenzdruckkammer durch geringe Druckluftbeaufschlagung verwendbar ist.

Durch die in den Unteransprüchen aufgeführten Massnahmen sind vorteilhafte Weiterbildungen und Verbesserungen des im Hauptanspruch angegebenen Merkmals möglich. Besonders vorteilhaft ist es, die Referenzdruckkammer in ein in die Radfelge einzuschraubendes, nach aussen hin abgeschlossenes Gehäuse des Reifendrucksensors derart zu befestigen, dass sie vollständig vom Luftdruck im Reifen umgeben ist. In diesem Fall führen auch Lecks am Einfüllkanal, an der Durchführung des Kontaktstiftes oder in anderen Bereichen der Referenzdruckkammer zu einem Druckausgleich mit der Druckluft im Reifen und damit zu einem Alarmsignal. Da die Spule und der Kondensator des Reifendrucksensors zu dem ortsfest in Radnähe angeordneten Signalaufnehmer hin in einer Schwingkreiskammer angeordnet sind, ist es zweckmässig, dass der Kontaktstift sowie ein Anschlussdraht der Referenzdruckkammer, mit einem Ende durch eine Abdichtung hindurch in die Schwingkreiskammer ragen.

## Zeichnung

Ein Ausführungsbeispiel der Erfindung ist in der Zeichnung dargestellt und in der nachfolgenden Beschreibung näher erläutert. Es zeigen Figur 1 den Ausschnitt eines Fahrzeugrades mit in der Felge eingesetzten, erfindungsgemässen Reifendrucksensor, Figur 2 einen Querschnitt durch den erfindungsgemässen Reifendrucksensor in vergrösserter Darstellung, Figur 3 einen stark vergrösserten Schaltbereich der Membran mit dem Kontaktstift und Figur 4 die stark vergrössert dargestellte Einspannstelle der Referenzdruckkammer am Sensorgehäuse.

## Beschreibung des Ausführungsbeispieles

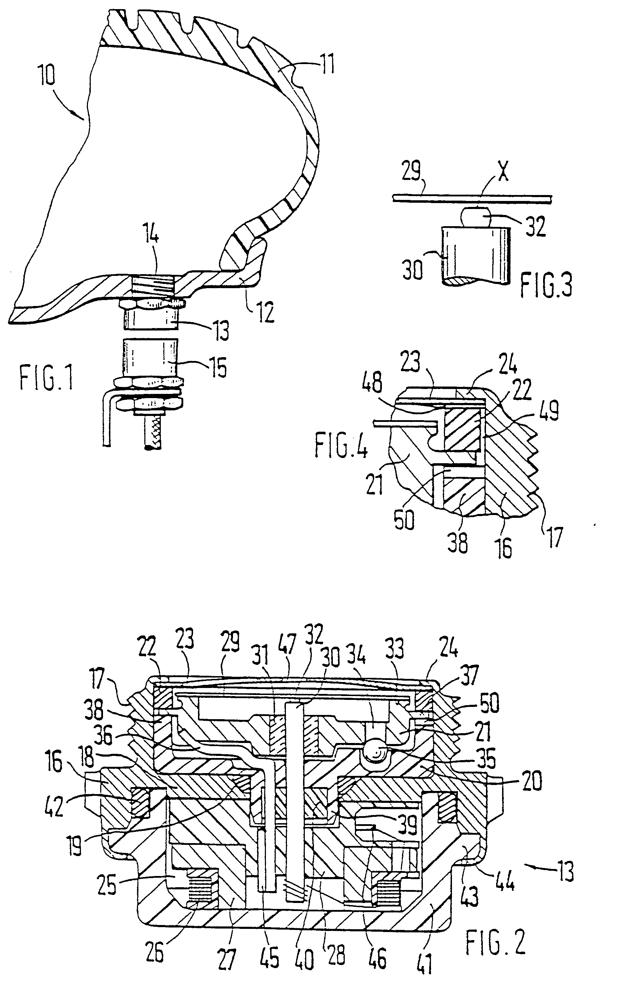

In Figur 1 ist der Ausschnitt eines Kraftfahrzeugrades in verkleinertem Massstab im Querschnitt dargestellt und mit 10 bezeichnet. Er zeigt einen Reifen 11, der auf einer Radfelge 12 befestigt ist. An einem nach innen gerichteten Abschnitt der Radfelge 12 ist ein Reifendrucksensor 13 in einer Gewindebohrung 14 der Radfelge 12 eingeschraubt. In geringem Abstand dazu ist im Bereich des Reifendrucksensors 13 an der nicht dargestellten Radaufhängung des Fahrzeugs ein Signalaufnehmer 15 befestigt, dessen Stirnseite zum Reifendrucksensor 13 hin gerichtet ist und eine hochfrequente Schwingung in den Reifendrucksensor 13 einkoppelt, wenn dieser bei jeder Umdrehung des Fahrzeugrades 10 vorbeikommt.

Der Aufbau des Reifendrucksensors 13 ist in Figur 2 dargestellt. Er besteht aus einem Sensorgehäuse 16 aus Edelstahl, das einen Gewindeansatz 17 zur Befestigung an der Radfelge 12 aufweist. Das Sensorgehäuse 16 ist nach vorn zum Reifen 11 hin offen. Im mittleren Bereich des Sensorgehäuses 16 befindet sich innen eine breite Ringschulter 18. In das Sensorgehäuse 16 ist ein Dichtring 19, ein Tragring 20 aus Kunststoff, eine Referenzdruckkammer 21 aus Stahl, ein Abstandsring 22 aus Faserkunststoff und eine gelochte Abdeckscheibe 23 eingelegt und durch die Ringschulter 18 und einen Bördelrand 24 an der vorderen Stirnseite des Sensorgehäuses 16 in diesem eingespannt. Unterhalb der Ringschulter 18 des Sensorgehäuses 16 befindet sich eine Schwingkreiskammer 25, in der eine Ringspule 26, ein Ferritkern 27, ein Aufnahmekörper 28 aus Kunststoff für den Ferritkern 27 und ein nicht erkennbarer, darin eingesetzter Kondensator angeordnet sind.

Die Referenzdruckkammer 21 ist zum Reifeninneren 11 hin durch eine flache Membran 29 abgeschlossen. In der Mitte der Referenzdruckkammer 21 ist ein Kontaktstift 30 mit einer Glasdurchführung 31 druckdicht und elektrisch isoliert in der Referenzdruckkammer 21 befestigt. An seinem vorderen Ende trägt er eine aufgeschweisste Kontaktkugel 32 aus Gold. Die Kontaktfläche der Kontaktkugel 32 wird gemeinsam mit der ringförmigen Auflagefläche 33 der Referenzdruckkammer 21 für die Membran 29 derart bearbeitet, dass zur Leckprüfung der Referenzdruckkammer 21 in drucklosem Zustand zwischen dem Kontaktstift 30 mit der Kontaktkugel 32 und dem mittleren Bereich der Membran 20 ein Luftspalt X von etwa 0,03 mm liegt. In Figur 3 ist dies durch eine stark vergrösserte Darstellung des Kontaktbereiches zwischen Membran 29 und Kontaktstift 30 erkennbar gemacht. Erst danach wird die Membran 29 stirnseitig aussen an der Auflagefläche 33 durch Laserstrahl druckdicht und spannungsfrei festgeschweisst. Anschliessend wird über einen Einfüllkanal 34 Luft oder Stickstoff in die Referenzdruckkammer 21 mit dem erforderlichen Referenzdruck eingefüllt. Dann wird der Einfüllkanal 34 durch eine darin eingepresste oder verschweisste Kugel 35 druckdicht verschlossen. Schliesslich ist noch ein Anschlussdraht 36 mit einem Ende an der Referenzdruckkammer 21 festgeschweisst.

Die Referenzdruckkammer 21 ist in den Tragring 20 derart eingesetzt, dass sie mit einem an ihrem Aussenumfang angeformten radialen Kragen 37 oben auf einer Ringwand 38 des Tragrings 20 aufliegt. Der Tragring 20 hat zur Schwingkreiskammer 25 hin einen durch die Ringschulter 18 des Stahlgehäuses 16 hindurchragenden Kragen 39, der den Anschlussdraht 36 und den Kontaktstift 30 umfasst. Um den die Referenzdruckkammer 21 tragenden Teil des Sensorgehäuses 16 zur Schwingkreiskammer 25 hin abzudichten, ist innerhalb des Kragens 39 eine Abdichtmasse 40, z. B. ein Polyurethan eingefüllt, das im Bereich des Kragens 39 den Kontaktstift 30 und den Anschlussdraht 36 luftdicht umgibt. Eine Abdeckkappe 41 schliesst die Schwingkreiskammer 35 nach aussen hin ab, indem sie mit einem weiteren Dichtring 42 am unteren Ende des Sensorgehäuses 16 aufliegt und an einer Ringschulter 43 durch eine Bördelung 44 des Sensorgehäuses 16 befestigt ist. Der Anschlussdraht 36 ist an seinem äusseren Ende mit einem Anschluss 45 des nicht erkennbaren Kondensators kontaktiert, dessen anderer Anschluss 46 mit einem Ende der Ringspule 26 verbunden ist. Das andere Ende der Ringspule 26 ist schliesslich mit dem freien Ende des Kontaktstiftes 30 kontaktiert.

Um eine vollständige Leckprüfung der Referenzdruckkammer 21 sicherzustellen, muss diese von der Druckluft im Reifen vollständig umspült sein. Dies wird dadurch erreicht, dass zunächst durch Öffnungen 47 in der Abdeckscheibe 23 die Druckluft zur Membran 29 der Referenzdruckkammer 21 gelangt. Wie Figur 4 zeigt, gelangt die Druckluft ausserdem über eine radiale Kerbe 48 im äusseren Bereich an der Unterseite der Abdeckscheibe 23 zu einem Spalt 49 zwischen Stahlgehäuse 16 und Abstandsring 22 und von dort zu einer in die Ringwand 38 des Tragringes 20 eingearbeiteten radialen Mulde 50, die zum Kragen 37 der Referenzdruckkammer 21 hin offen ist. Von dort gelangt schliesslich die Druckluft auf die Rückseite der Referenzdruckkammer 21. Der radiale Spalt 49 zwischen dem Sensorgehäuse 16 und dem Abstandsring 22 wird dadurch gebildet, dass der Abstandsring 20 ebenso wie der Kragen 37 der Referenzdruckkammer 21 einen kleineren Aussendurchmesser aufweist als die Aufnahme des Sensorgehäuses 16 in diesem Bereich. Durch diese Massnahme können sowohl Lecks an der Glasdurchführung 31, am Einfüllkanal 34 sowie an der Schweissnaht der Membran 29 erkannt werden, indem sie zu einem Druckausgleich zwischen der Druckluft im Reifen an der Aussenseite der Membran 29 und dem Referenzdruck an der Innenseite der Membran 29 führen, so dass sich die Membran 20 vom Kontaktstift 30 abhebt und damit den Schwingkreis unterbricht.

Die Erfindung ist nicht auf das Ausführungsbeispiel beschränkt, da in vielen Fällen eine Lecküberwachung der Membranverschweissung an der Referenzdruckkammer ausreicht, was bereits dadurch gewährleistet wird, dass die umlaufende Schweissnaht an der Membran von der Druckluft im Reifen erreicht wird. Auch der Kontaktabstand X zwischen dem Kontaktstift und der Membran kann auf andere Werte und auf andere Art, z. B. durch Stauchen der Kontaktkugel 32 nach dem Anschweissen der Membran 29 vor dem Einfüllen des Gases in die Referenzdruckkammer 21 erfolgen. Wesentlich ist dabei, dass bei gleichem Druck auf beiden Seiten der Membran 29 diese zur Stromkreisunterbrechung vom Kontaktstift 30 abhebt.

**Patentansprüche**

1. Reifendrucksensor für Kraftfahrzeuge mit einem am Umfang einer Radfelge zu befestigenden, vom Reifendruck zu betätigenden Druckschalter zur Reifendrucküberwachung, der eine Referenzdruckkammer aufweist, welche zum Reifen hin durch eine elektrisch leitende Membran abgeschlossen ist und einen Kontaktstift trägt, an den bei ausreichendem Luftdruck im Reifen der mittlere Bereich der Membran zur Schliessung eines Stromkreises anliegt, dadurch gekennzeichnet, dass zur Leckprüfung der Referenzdruckkammer (21) bei gleichem Druck an den beiden Seiten der Membran (29) zwischen dem Kontaktstift (30) und dem mittleren Bereich der Membran (29) ein Luftspalt (X) liegt.

2. Reifendrucksensor nach Anspruch 1, dadurch gekennzeichnet, dass die Referenzdruckkammer (21) in einem in die Radfelge (12) einzuschraubenden, nach aussen hin abgeschlossenen Sensorgehäuse (16) derart befestigt ist, dass sie ringsum von der Druckluft im Reifen (11) umgeben ist.

3. Reifendrucksensor nach Anspruch 2, dadurch gekennzeichnet, dass der Kontaktstift (30) sowie ein Anschlussdraht (36) der Referenzdruckkammer (21) mit je einem Ende durch eine Abdichtung (40) hindurch in eine den Kondensator und die Spule (26) eines Schwingkreises aufnehmende Schwingkreiskammer (25) ragen.

4. Reifendrucksensor nach Anspruch 3, dadurch gekennzeichnet, dass zwischen Referenzdruckkammer (21) und Schwingkreiskammer (25) ein Tragring (20) angeordnet ist, der zur Schwingkreiskammer (25) hin einen den Anschlussdraht (36) und den Kontaktstift (30) umfassenden Kragen (39) aufweist in welchem zur Abdichtung eine Abdichtmasse (40) eingefüllt ist.

5. Reifendrucksensor nach Anspruch 4, dadurch gekennzeichnet, dass der Tragring (20) mit einer äusseren Ringwand (38) von unten an einem am Aussenumfang der Referenzdruckkammer (21) angeformten radialen Kragen (37) anliegt, und mit ihm durch einen Abstandsring (22) oberhalb des Kragens (37) sowie einer mit Öffnungen (47) versehenen Abdeckscheibe (23) von einem Bördelrand (24) des Sensorgehäuses (16) eingespannt ist.

6. Reifendrucksensor nach Anspruch 5, dadurch gekennzeichnet, dass zum Druckausgleich zwischen der Vor- und Rückseite der Referenzdruckkammer (21) die Abdeckscheibe (23) im äusseren Bereich mindestens eine radiale Kerbe (48), der Abstandsring (22) ebenso wie der Kragen (37) der Referenzdruckkammer (21) einen kleineren Aussendurchmesser als die Aufnahme des Sensorgehäuses (16) und die Ringwand (38) des Tragringes (20) eine zum Kragen (37) der Referenzdruckkammer (21) hin offene radiale Mulde (50) aufweist.

## Claims

1. Detector of the inflation pressure of motor vehicle tyres with a manometric switch to be activated by the tyre pressure and to be mounted on the circumference of a wheel rim in order to monitor the tyre pressure, which detector has a reference pressure chamber, which is isolated from the type by an electrically conductive diaphragm and carries a contact pin which, when there is sufficient air pressure in the tyre, is touched by the middle area of the diaphragm in order to close an electric circuit, characterized in that for the purpose of checking for leaks in the reference pressure chamber (21) an air gap (X) occurs between the contact pin (30) and the middle area of the diaphragm (29) when the pressure on both sides of the diaphragm (29) is equal.

2. Detector of the inflation pressure of types according to Claim 1, characterized in that the reference pressure chamber (21) is mounted in a detector housing (16), which is to be screwed into the wheel rim (12) and is isolated from the outside, in such a way that it is entirely surrounded by the compressed air in the tyre (11).

3. Detector of the inflation pressure of tyres according to Claim 2, characterized in that the contact pin (30) and a connecting wire (36) of the reference pressure chamber (21) respectively project with one end through a seal (40) into an oscillating circuit chamber (25) accommodating the capacitor and the coil (26) of an oscillating circuit.

4. Detector of the inflation pressure of tyres according to Claim 3, characterized in that there is arranged between reference pressure chamber (21) and oscillating circuit chamber (25) a retaining ring (20) which, seen towards the oscillating circuit chamber (25), has a collar (39) which encompasses the connecting wire (36) and the contact pin (30), and is filled for the purpose of providing a seal with a sealing medium (40).

5. Detector of the inflation pressure of tyres according to Claim 4, characterized in that the retaining ring (20) rests from below, by means of an outer annular wall (38), on a radial collar (37) forming an integral part of the outer circumference of the reference pressure chamber (21), and is clamped with the collar through a spacing ring (22) above the collar (37) and also with a cover disc (23) provided with openings (47) by a flange edge (24) of the detector housing (16).

6. Detector of the inflation pressure of tyres according to Claim 5, characterized in that to equalize the pressure between the front face and rear of the reference pressure chamber (21) the cover disc (23) has at least one radial groove (48) in the outer region, the spacing ring (22), in the same way as the collar (37) of the reference pressure chamber (21), has a smaller external diameter than the accommodation of the detector housing (16), and the annular wall (30) of the retaining ring (20) has a radial cavity (50) open towards the collar (37) of the reference pressure chamber (21).

## Revendications

1. Détecteur de pression de pneu pour véhicules, avec un interrupteur manométrique, pour contrôle de la pression du pneu, fixé à la périphérie d'une jante de roue, commandé par la pression du pneu, qui présente une chambre de compression de référence, laquelle est isolée du pneu par une membrane conductrice de l'électricité et porte une tige de contact sur laquelle, à pression d'air atteinte dans le pneu, la zone centrale de la membrane adhère pour former un circuit électrique, caractérisé en ce que pour tester les fuites de la chambre de compression de référence (21), à pression égale des deux côtés de la membrane (29), entre la tige de contact (30) et la zone centrale de la membrane (29), il existe un intervalle d'air (X).

2. Détecteur de pression de pneu pour véhicules selon la revendication 1, caractérisé en ce que la chambre de compression de référence est fixée dans un boîtier de détecteur vissé sur la jante (12), fermé vers l'extérieur, de telle façon qu'elle est entourée tout autour par l'air comprimé du pneu.

3. Détecteur de pression de pneu pour véhicules selon la revendication 2, caractérisé en ce que la tige de contact (30) de même qu'un fil de raccord (36) de la chambre de pression de référence (21) débouchent chacun avec une extrémité, à travers une couche d'étanchéité (40) dans une chambre de circuit oscillant (25) recueillant le condensateur et la bobine (26) d'un circuit oscillant.

4. Détecteur de pression de pneu pour véhicules selon la revendication 3, caractérisé en ce que, entre la chambre de pression de référence (21) et la chambre de circuit oscillant (25), est placé un anneau porteur (20), qui présente dans la direction de la chambre à circuit oscillant (25), une collerette (39) entourant le fil de raccord (36) et la tige de contact (30), et dans laquelle est introduite pour étanchéification un produit d'étanchéité.

5. Détecteur de pression de pneu pour véhicules selon la revendication 4, caractérisé en ce que l'anneau porteur (20) adhère avec une paroi annulaire extérieure (38) en dessous d'un rebord radial (37) formé à la périphérie extérieure de la chambre de compression de référence (21) et est mis en serrage avec lui à travers une bague d'écartement (22) au-dessus du rebord radial (37), de même avec une plaque de recouvrement (23) munie d'ouvertures (47), par un collet rabattu (24) du boîtier de détecteur (16).

6. Détecteur de pression de pneu selon la revendication 5, caractérisé en ce que, pour la compensation de pression entre la partie avant et la partie arrière de la chambre de compression de référence (21), la plaque de recouvrement (23) offre dans sa zone extérieure au moins un enfoncement radial (48), que la bague d'écartement (22) de même que le rebord radial (37) de la chambre de compression de référence (21), présentent un diamètre plus petit que le logement du boîtier de détecteur (16) et que la paroi annulaire (38) de l'anneau porteur (20) montre une cavité radiale (50) ouverte en direction du rebord radial (37) de la chambre de compression de référence (27).

FIG.1

FIG.3

FIG.4

FIG.2